# EUROPÄISCHE PATENTANMELDUNG

(11) **EP 1 657 426 A1**
(43) Veröffentlichungstag der Anmeldung: **17.05.2006**
(21) Anmeldenummer: 05110536.9
(22) Anmeldetag: 09.11.2005
(51) Int. Cl.: F02M 35/024, B01D 53/04, B01D 46/52

(54) **Aktivkohlebeschichtetes Filterelement zum Verhindern des Ausströmens von Kohlenwasserstoffen aus einer Öffnung**

(30) Priorität: 13.11.2004 DE 102004054970
(71) Anmelder: MANN+HUMMEL GmbH, 71638 Ludwigsburg (DE)
(72) Erfinder: Scholl, Hans-Peter, 74395, Mundelsheim (DE); Scholz, Günther, 70374, Stuttgart (DE); Daubner, Heinz, 74343, Sachsenheim (DE); Rackerseder, Johann, 84168, Aham (DE); Lebherz, Reinhold, 74395, Mundelsheim (DE); Pfeiffer, Frank, 71297, Mönsheim (DE); Sohnemann, Jens, 84034, Landshut (DE); Stahl, Jürgen, 71640, Ludwigsburg (DE); Brenneis, Fritz, 84160, Frontenhausen (DE)

(57) **Zusammenfassung**

Es wird ein aktivkohlebeschichtetes Filterelement zum Verhindern des Ausströmens von Kohlenwasserstoffen aus einer Öffnung vorgeschlagen. Dieses besteht aus einem Aktivkohle enthaltenden Medium, welches im Wesentlichen plattenförmig ausgestaltet ist und einen Rahmen aufweist. Der Rahmen ist an wenigstens zwei Seiten mit Dichtlippen versehen. Das Medium ist mit dem Rahmen in einem Kunststoffträger angeordnet, wobei der Kunststoffträger in die Öffnung einsetz- und fixierbar ist. Die Dichtlippen liegen an der Wandung der Öffnung an.

## Beschreibung

### Technisches Gebiet

Die vorliegende Erfindung betrifft ein aktivkohlebeschichtetes Filterelement nach der Gattung des Patentanspruches 1. Insbesondere betrifft die Erfindung ein solches Filterelement für eine Brennkraftmaschine.

### Stand der Technik

Wesentliches Entwicklungsziel bei modemen Brennkraftmaschinen ist eine Reduktion der Schadstoffemission. Bisherige Entwicklungsaktivitäten hatten vor allem eine Optimierung des Abgasreinigungssystems zum Ziel. Moderne Abgasreinigungssysteme erzielen inzwischen Umwandlungsraten für Schadstoffe von über 97%.

Die zunehmende Luftverunreinigung hat nahezu in allen Staaten dazu geführt, dass der Schadstoffausstoß begrenzt wurde und immer stärker limitiert wird. Um die Reproduzierbarkeit und Vergleichbarkeit zu garantieren, wurden unterschiedliche Prüfverfahren, Bewertungen und Grenzwerte erarbeitet. So existiert in den USA bezüglich der Grenzwerte beispielsweise die Kategorie ULEV (Ultra Low Emission Vehicle) und die Kategorie mit den derzeit strengsten Werten, SULEV (Super Ultra Low Emission Vehicle).

Zur Reinigung der in den Verbrennungsmotoren für die Verbrennung benötigten Luft sind Luftfiltersysteme, insbesondere mit Filterelementen zur stirnseitigen Anströmung, bekannt. Diese Filter sind z.B. aus Filterlagen gewickelt, die abwechselnd flach und wellenförmig ausgebildet sind. Hierdurch entstehen Kanäle, die durch einen wechselseitigen Verschluss eine Durchströmung des Filtermediums erzwingen. Dadurch tritt das zu filternde Medium durch stirnseitig offene Kanäle auf der Eintrittsseite des Filters ein und wechselt innerhalb des Filterelementes in Kanäle, die abströmseitig geöffnet und den Einströmkanälen benachbart sind. Dadurch findet eine Filterung des Fluides statt.

So offenbart beispielsweise die DE 10063789 A ein Filterelement zur stirnseitigen Anströmung, welches dreieckige Kanäle aufweist, die derart wechselseitig verschlossen sind, dass bei der Durchströmung von einer Anströmseite zu einer Abströmseite das zu filternde Fluid durch das Filtermaterial geleitet werden muss. Die Kanäle werden durch wechselseitiges Aufbringen von flachen Lagen und gefalteten Lagen gebildet, wobei jeweils alle Seiten der anströmseitigen Kanäle in abströmseitige Kanäle münden.

In der PCT/WO 200050149 wird ein Filterelement mit ersten und zweiten einander gegenüberliegenden Strömungsseiten offenbart. Das Filtermedium besteht aus einer gefalteten Konstruktion, wobei die Faltungen in eine obere und eine untere Reihe von Kanälen aufgeteilt sind. Die obere Reihe von Kanälen ist am abströmseitigen Ende verschlossen, während die untere Reihe von Kanälen am einströmseitigen Ende verschlossen ist.

Im Zuge der oben geschilderten SULEV/ULEV-Problematik ist es jedoch nachteilig, dass durch das Fehlen von Materialien, welche in der Lage sind, Kohlenwasserstoffe zu binden, die im Ansaugrohr einer Brennkraftmaschine vorhandenen Kohlenwasserstoffe in die Umwelt gelangen können.

Es ist daher die Aufgabe der vorliegenden Erfindung, die genannten Nachteile des Standes der Technik zu vermeiden und ein aktivkohlebeschichtetes Filterelement zu schaffen, das im Ansaugtrakt einer Brennkraftmaschine angeordnet werden kann und die Emission eines Fahrzeuges zuverlässig verringert.

### Offenbarung der Erfindung

Der wesentliche Vorteil der Erfindung liegt darin, dass das Filterelement ein Medium aufweist, welches in einem Kunststoffträgerrahmen angeordnet ist. Dieser Kunststoffträgerrahmen lässt sich in eine reinluftseitige Öffnung einsetzen und fixieren, wobei der das Medium umschließende Rahmen wenigstens zwei Dichtlippen aufweist und diese Dichtlippen an der Wandung der Öffnung anliegen.

Der wesentliche Vorteil der Erfindung liegt damit darin, dass das Medium unentfembar und manipulationssicher aufgrund des Kunststoffträgers ist und eine unmittelbare Abdichtung zwischen Medium und Wandung der Öffnung durch die Dichtlippen erzielt wird.

Gemäß einer Ausgestaltung der Erfindung ist das Medium in den Kunststoffträger einschiebbar. Am Kunststoffträger angeordnete Haltelaschen sorgen dafür, dass das Medium in die vorgesehene Position gelangt. Der Kunststoffträger selbst wird mittels Vibrationsschweißen in der vorgesehenen Öffnung fixiert. Aufgrund der Flexibilität der Dichtlippen ist das Vibrationsschweißen in eine Vibrationsrichtung möglich, die lediglich zu einer Lageveränderung der Dichtlippen - nicht jedoch zu Undichtigkeiten - führt

Zur Erhöhung der Stabilität, insbesondere bei sehr großflächigen aktivkohlebeschichteten Filterelementen, ist der Kunststoffträger gemäß einer weiteren Ausgestaltung mit einem Stützgitter versehen. Auf diesem Stützgitter liegt das Medium auf. Selbst hohe Differenzdrücke, die sich aufgrund eines hohen Luftdurchsatzes einstellen, führen nicht zu einer Lageänderung des Mediums.

Gemäß einer Ausgestaltung des Mediums besteht dieses aus zickzackförmig gefaltetem Vlies, welches aktivkohledotiert ist. Zur Positionierung der Dichtlippen an dem Vlies ist jeweils ein U-förmiges Halteprofil vorgesehen. Dieses trägt die Dichtlippe und wird über die letzte Falte des Filtermediums gesteckt.

Eingesetzt wird ein solches Filterelement im Wesentlichen bei Brennkraftmaschinen, bei denen eine Ausgasung von Kohlenwasserstoffen aus dem Ansaugtrakt wirksam verhindert werden soll. Hierzu verschließt das Medium eine Ansaugleitung.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Weitere Einzelheiten der Erfindung werden in der Zeichnung anhand von Ausführungsbeispielen beschrieben. Hierbei zeigen:

Figur 1 die schematische Darstellung eines aktivkohlebeschichteten Filterelementes im Ansaugtrakt einer Brennkraftmaschine,

Figur 2 die Draufsicht auf ein Filterelement,

Figur 3 die Detaildarstellung einer Dichtlippe an einem zickzackförmig gefalteten Filterelement,

Figur 4 einen Kunststoffträger in einer Draufsichtdarstellung,

Figur 5 einen Kunststoffträger mit eingelegtem Filterelement und

Figur 6 die Detaildarstellung der Abdichtung.

### Ausführungsform(en) der Erfindung

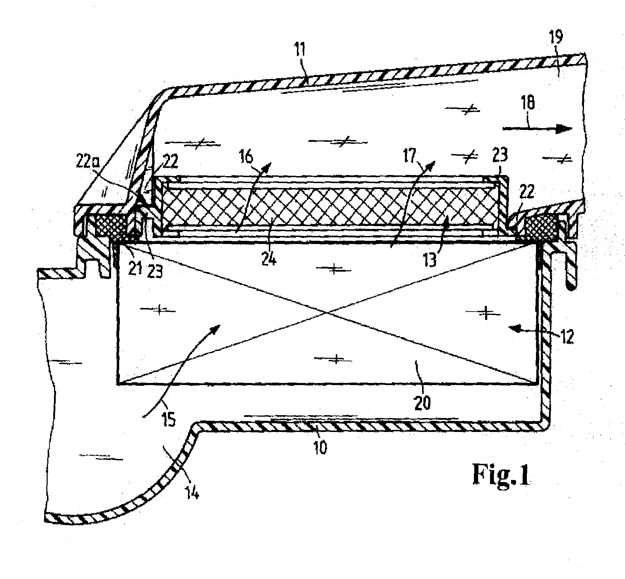

Die in Figur 1 gezeigte Darstellung zeigt ein Ansaugfiltersystem für eine Brennkraftmaschine mit einem Gehäuseunterteil 10, einem Gehäuseoberteil 11 sowie einem zwischen den beiden Gehäuseteilen angeordneten Partikelfilter 12 und einem oberhalb des Partikelfilters angeordneten aktivkohlebeschichteten Filterelement 13. Die Ansaugluft strömt - ausgehend von der Ansaugluftöffnung 14 - gemäß Pfeil 15 durch den Partikelfilter 12 hindurch und anschließend gemäß Pfeil 16 und 17 durch das Filterelement 13 in den Reinluftbereich und wird von dort gemäß Pfeil 18 zu der hier nicht dargestellten Brennkraftmaschine geführt. Sofern die Brennkraftmaschine nicht in Betrieb ist, gelangen Kraftstoffdämpfe in den Reinluftraum 19 und können ohne ein aktivkohlebeschichtetes Filterelement durch den Partikelfilter hindurch bis zur Ansaugluftöffnung 14 und damit in die Umwelt gelangen. Dies wird jedoch wirksam durch das Filterelement 13 verhindert. Die Aktivkohle nimmt Kohlenwasserstoffe, welche austreten könnten, auf, und adsorbiert diese. Beim Start der Brennkraftmaschine desorbieren die Kohlenwasserstoffe von dem Adsorbens und werden mit der Ansaugluft abtransportiert, damit wird das Filterelement wieder aufnahmefähig für eine spätere Benutzung. Der Partikelfilter ist ein zickzackförmig gefaltetes Element 20, welches plattenförmig gestaltet ist und am oberen Rand eine umlaufende PUR-Dichtung aufweist. Diese Dichtung ist zwischen Gehäuseunterteil 10 und Gehäuseoberteil 11 gespannt. Das Gehäuseoberteil 11 ist mit einer Aufnahme 22 bzw. mit einem Rand versehen, auf welchem ein Kunststoffträger 23 aufgelegt ist und mit der Aufnahme 22 verschweißt werden kann. In dem Kunststoffträger ist das die Aktivkohle enthaltene Medium 24 angeordnet. In dem hier gezeigten Beispiel ist dieses Medium eine Schaumstoffmatte, in welche Aktivkohle eindotiert ist.

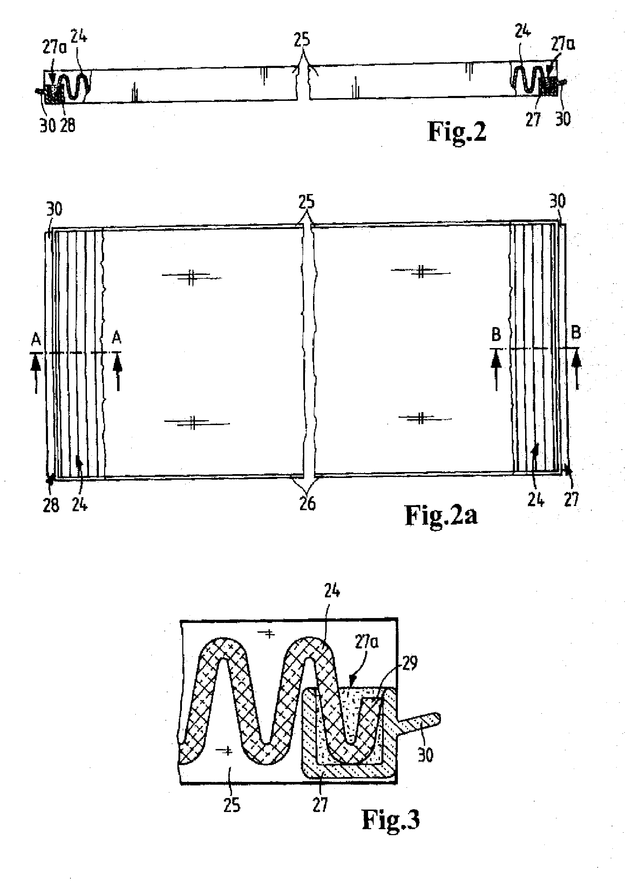

Gemäß Figur 2 kann das Medium auch ein zickzackförmig gefaltetes Vlies sein, welches die Aktivkohle trägt.

Das in Figur 2 gezeigte Medium 24 ist mit einem Stimseitenband 25, 26 umfasst. Die Verbindung von Stirnseitenband und Medium erfolgt zweckmäßigerweise durch ein Verkleben der Stirnkanten, so dass eine Abdichtung zwischen Ober- und Unterseite entsteht. An den Schmalseiten befindet sich jeweils ein Dichtungsprofil 27, 28, welches in Figur 3 in einer vergrößerten Schnittdarstellung gezeigt ist. Das Medium 24 läuft an dem jeweiligen Ende mit einem Bogen 29 aus. Das Dichtungsprofil 27 besteht aus einem U-förmigen Halteprofil, das wenigstens teilweise den Bogen bzw. die Endfalte des Filtervlieses umgreift. Die Dichtlippe 30 an dem U-förmigen Halteprofil ist elastisch ausgestaltet. Es kann sich hier um ein Elastomer handeln, welches im Zweikomponentenspritzgießverfahren mit dem U-förmigen Halteprofil verbunden ist.

Selbstverständlich besteht auch die Möglichkeit, durch Einsatz eines bestimmten Kunststoffmaterials und entsprechender geometrischer Gestaltung eine federelastische Dichtlippe bei einem Einkomponentenwerkstoff vorzusehen.

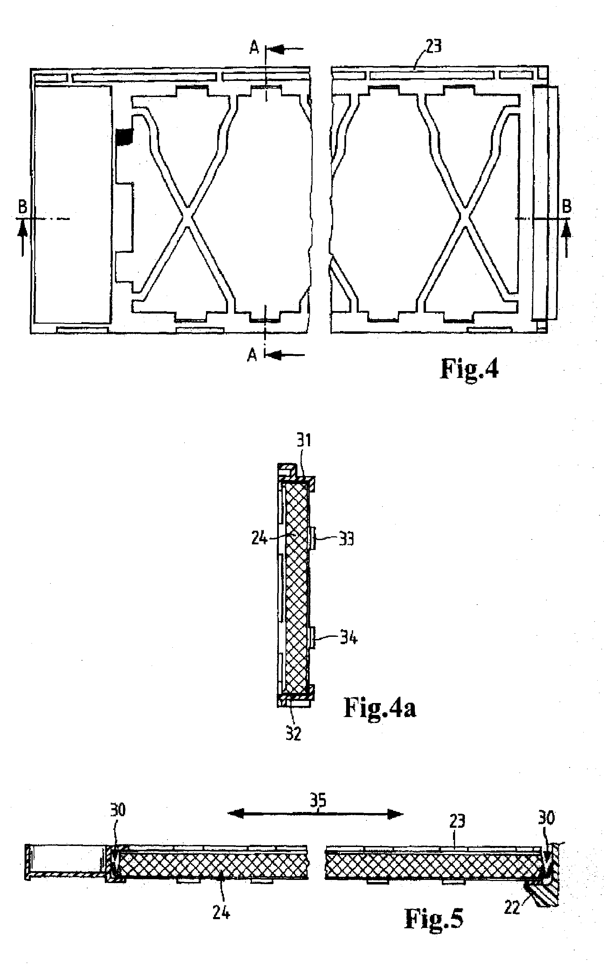

Das in Figur 2 und 3 gezeigte vorkonfektionierte Medium wird in einen Kunststoffträger gemäß Figur 4 eingeschoben. Der Kunststoffträger ist rechtsseitig geöffnet und weist - wie in Figur 4a dargestellt - Seitenwinkel 31, 32 auf, die das Medium 24 positionieren. Unterhalb des Mediums sind ein Stützgitter bzw. Stützstege 33, 34 vorgesehen. Auf der Oberseite ist das Medium - wie in Figur 4 gezeigt - offen.

Figur 5 zeigt den Kunststoffträger 23, welcher in der Aufnahme 22 liegt, die hier nur schematisch dargestellt ist. Das Medium liegt mit der Dichtlippe 30 an der Aufnahme 22 bzw. der Wandung der Durchgangsöffnung an. Beim Schweißvorgang bewegt sich der Kunststoffträger gemäß Pfeil 35 geringfügig in Längsrichtung. Diese Bewegung kann ohne weiteres von der Dichtlippe aufgenommen werden. Auch die endgültige durch die Verschweißung definierte Position des Kunststoffträgers in der Aufnahme 22 führt aufgrund der Elastizität der Dichtlippe 30 zu einer zuverlässigen Abdichtung an den Schmalseiten.

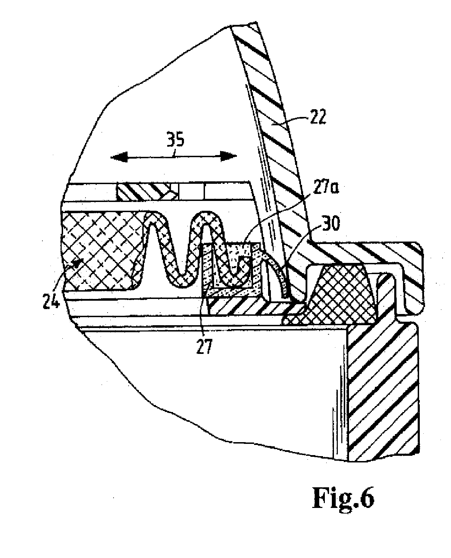

In Figur 6 ist in einer Detaildarstellung die Abdichtung zwischen Aufnahme 22 und Medium 24 gezeigt. Die Längsseiten sind durch die Schweißverbindung zwischen Kunststoffträger 23 und Aufnahme 22 abgedichtet.

## Patentansprüche

1. Aktivkohlebeschichtetes Filterelement zum Verhindern des Ausströmens von Kohlenwasserstoffen aus einer Öffnung, bestehend aus einem Aktivkohle enthaltenden Medium, welches im Wesentlichen plattenförmig ausgestaltet ist und einen Rahmen aufweist, wobei der Rahmen an wenigstens zwei Seiten mit Dichtlippen versehen ist, **dadurch gekennzeichnet, dass** das Medium mit dem Rahmen in einem Kunststoffträger angeordnet ist und der Kunststoffträger in die Öffnung einsetzbar und fixierbar ist, wobei die Dichtlippen an der Wandung der Öffnung anliegen.

2. Aktivkohlebeschichtetes Filterelement nach Patentanspruch 1, **dadurch gekennzeichnet, dass** das plattenförmig gestaltete Medium in den Kunststoffträger einschiebbar ist und der Kunststoffträger Haltelaschen zur Fixierung des Mediums aufweist.

3. Aktivkohlebeschichtetes Filterelement nach Patentanspruch 1, **dadurch gekennzeichnet, dass** der Kunststoffträger mittels Vibrationsschweißen in der Öffnung fixiert ist.

4. Aktivkohlebeschichtetes Filterelement nach Patentanspruch 3, **dadurch gekennzeichnet, dass** die Vibrationsschweißflächen zu den Dichtlippen rechtwinklig verlaufend angeordnet sind.

5. Aktivkohlebeschichtetes Filterelement nach einem der vorherigen Ansprüche, **dadurch gekennzeichnet, dass** der Kunststoffträger wenigstens einseitig mit einem flächigen Stützgitter versehen ist.

6. Aktivkohlebeschichtetes Filterelement nach einem der vorherigen Ansprüche, **dadurch gekennzeichnet, dass** das Aktivkohle enthaltende Medium zickzackförmig gestaltet ist und insbesondere aus einem Vlies besteht, wobei die Dichtlippen ein U-förmiges Halteprofil aufweisen, welches wenigstens teilweise die Endfalte des Filtervlieses umgreift.

7. Anwendung eines aktivkohlebeschichteten Filterelementes im Ansaugtrakt einer Brennkraftmaschine, wobei die Aktivkohle Kohlenwasserstoffe aus dem Ansaugtrakt adsorbiert.

8. Verfahren zum Einbau eines aktivkohlebeschichteten Filterelementes gemäß Patentanspruch 1, **gekennzeichnet durch** die Schritte:
- Herstellen eines plattenförmig gestalteten und Aktivkohle enthaltenden Mediums mit einem Rahmen und Dichtlippen,
- Einschieben des Mediums in einen Kunststoffträger,
- Einlegen des Kunststoffträgers in eine entsprechend ausgesparte Öffnung aus Kunststoff, wobei eine Fixierung des Kunststoffträgers in der Öffnung **durch** Vibrationsschweißen erfolgt und die Dichtlippen nach der Fixierung an der Wandung der Öffnung anliegen.
